# EUROPÄISCHE PATENTSCHRIFT

(11) **EP 3 419 808 B1**
(45) Veröffentlichungstag und Bekanntmachung des Hinweises auf die Patenterteilung: **13.01.2021**
(21) Anmeldenummer: 17721350.1
(22) Anmeldetag: 27.04.2017
(51) Int. Cl.: B29C 49/68, B29C 49/64, B29K 67/00, B29L 31/00

(54) **VORRICHTUNG UND VERFAHREN ZUR THERMISCHEN KONDITIONIERUNG VON VORFORMLINGEN**
DEVICE AND METHOD FOR THERMALLY CONDITIONING PREFORMS
DISPOSITIF ET PROCÉDÉ DE CONDITIONNEMENT THERMIQUE DE PRÉFORMES

(30) Priorität: 29.04.2016 DE 102016005273
(43) Veröffentlichungstag der Anmeldung: 02.01.2019
(73) Patentinhaber: KHS Corpoplast GmbH, 22145 Hamburg (DE)
(72) Erfinder: MEYER, Niels, 22869 Schenefeld (DE); ULUTÜRK, Deniz, 22765 Hamburg (DE); LEWIN, Frank, 22889 Tangstedt (DE)
(74) Vertreter: Meissner Bolte Partnerschaft mbB
(86) Internationale Anmeldenummer: PCT/EP2017/060120
(87) Internationale Veröffentlichungsnummer: WO 2017/186875

(56) Entgegenhaltungen:
- WO-A1-01/62463
- WO-A1-2014/208693
- DE-A1- 2 427 611
- US-B1- 6 241 939

## Beschreibung

Die Erfindung betrifft einen Heizkasten nach Anspruch 1 sowie eine Heizeinrichtung nach Anspruch 13, eine Blasmaschine nach Anspruch 14 und ein Verfahren nach Anspruch 15.

Bei der Behälterformung durch Blasdruckeinwirkung werden Vorformlinge aus einem thermoplastischen Material, beispielsweise aus PET (Polyethylenterephthalat), im Bereich einer Blasmaschine unterschiedlichen Bearbeitungsstationen zugeführt. Typischerweise weist eine derartige Blasmaschine eine Transportvorrichtung zur Zuführung von Vorformlingen an die Blasmaschine auf, eine Heizvorrichtung zur thermischen Konditionierung der Vorformlinge sowie eine Blasstation mit Blaseinrichtung, in deren Bereich die temperierten Vorformlinge durch biaxiale Ausdehnung zu einem Behälter expandiert werden. Die Expansion erfolgt mit Hilfe von unter Druck stehendem Fluid, insbesondere einem Blasgas, das in den zu expandierenden Vorformling eingeleitet wird. In der der Blasstation vorgelagerten Heizvorrichtung werden die Vorformlinge auf eine geeignete Grundtemperatur vorgeheizt, um das Material für die Streckblasformung vorzubereiten. Darüber hinaus werden die Vorformlinge mit einem geeigneten Temperaturprofil versehen, um bereichsweise Fließeigenschaften des Materials bei der Streckblasformung gezielt zu beeinflussen.

In der Entwicklungshistorie von Heizeinrichtungen zur thermischen Konditionierung von Vorformlingen hat sich herausgestellt, dass sich scharf abgegrenzte Temperaturprofile, also Bereiche unterschiedlicher Temperaturen im Wandmaterial der Vorformlinge, besonders gut durch Einsatz von gerichteter Wärmestrahlung in offenen Strahlungsräumen erzielen lässt. Wärmestrahlung wird in offenen Bereichen nicht von eingrenzenden Wandbereichen reflektiert und führt somit nicht zur Verschwimmung der Temperaturgrenzen zwischen Bereichen unterschiedlicher Erwärmung. Hingegen führt die Verwendung von geschlossenen Strahlungsräumen zu signifikanten Energieeinsparungen bei der Erwärmung der Vorformlinge, da reflektierte Wärmestrahlung ebenfalls zur Grundtemperierung der Vorformlinge verwendet werden kann und somit wenig Strahlungsenergie ungenutzt verloren geht. Geschlossene Strahlungsräume verschlechtern also die scharfe Profilierung der Vorformlinge einerseits, verbessern aber die Energiebilanz durch die bei Nutzung der Reflexionsstrahlung entstehende Effizienzsteigerung andererseits.

Typischerweise ist die Heizvorrichtung als Linearofen ausgebildet, wobei die Vorformlinge zur Temperierung durch eine mit aneinandergereihten Heizkästen gebildete Heizstrecke geführt werden. Zum Transport der Vorformlinge entlang der Heizstrecke der Heizvorrichtung werden die Vorformlinge typischerweise aufrecht mit der Mündung nach oben an Transportdornen gehaltert und zwangsgeführt durch Heizgassen der Heizkästen bewegt.

Im Bereich der Heizkästen werden die Transportdorne typischerweise in Rotation versetzt, zum Beispiel indem der Transportdorn an einem Zahnriemen derart vorbeigeführt wird, dass eine an dem Transportdorn befestigte Zahnscheibe in den Zahnriemen greift und dabei zwangsgedreht wird. Durch eine derartige Rotation können die Vorformlinge gleichmäßig temperiert werden. Gegebenenfalls kann die Rotation streckenweise ausgesetzt werden, um zum Beispiel ein bestimmtes Profilmuster zu prägen.

Innerhalb der Heizkästen sind üblicherweise Nahinfrarot-Strahler (NIR) für die Erzeugung einer Heizstrahlung vorgesehen. Bekannt ist auch, Infrarotstrahler (IR) zu verwenden. Ein typischer Heizkasten enthält darüber hinaus Wärmestrahlung reflektierende Reflexionsstrukturen, um eine geeignete Verteilung der Wärmestrahlung innerhalb des Heizkastens zu ermöglichen.

Aus dem Stand der Technik ist bekannt, die Wärmestrahler als im Wesentlichen stabförmige Halogenstrahler auszuführen. Bei bekannten Heizkästen werden die Strahler typischerweise in einer Ebene parallel übereinander an einer vertikalen Seite des Heizkastens befestigt, so dass die Vorformlinge in einer Heizgasse des Heizkastens zwischen den Strahlern und einer den Strahlern gegenüberliegenden Seitenwand hindurchgeführt werden können. Die Temperaturprofilierung der Vorformlinge entlang ihrer Längsachse erfolgt dabei unter anderem durch unterschiedliche Leistungseinstellungen der übereinander angeordneten Strahlereinheiten.

Hinter den Strahlern, zuweilen auch im Bodenbereich des Heizkastens und zuweilen auch an der der Strahlerebene gegenüber liegenden Seite des Heizkastens, können Wärmestrahlung reflektierende Reflektoren angeordnet sein, die für eine effektive beziehungsweise für eine gewünschte Verteilung der Wärmestrahlung innerhalb des Heizkastens sorgen. Derartige Reflektoren können aus Metall, zum Beispiel ein Blech, oder aus keramischen oder anderen Materialien hergestellt sein. Je nach Anwendungsfall sind die Reflektoren in unterschiedlichen Geometrien ausgebildet. Beispielsweise kann hinter den Strahlern ein Aluminium-Profil vorgesehen sein, das in einer W-Form ausgebildet ist. Beim Einsatz solcher W-Profile hat sich gezeigt, dass sich das Material des Reflektors übermäßig stark erhitzt, weswegen zuweilen eine aktive Kühlung des Profils von der Rückseite her vorgesehen sein muss. Typischerweise wird diese aktive Kühlung durch einen Luftstrom mit einem unter dem Heiztunnel angeordneten Lüfter erzeugt. Gleichzeitig wird mit diesem Luftstrom eine Kühlung der elektrischen Anschlüsse der Strahlerröhren erzielt. Die Strahlerröhren sind typischerweise an ihren freien Enden in etwa 90° Winkeln abgewinkelt und ragen mit ihren Endbereichen in das Reflektorprofil. Die abzuführende Wärmemenge stellt einen wesentlichen Verlustfaktor in der Energiebilanz des Heizkastens dar.

Aufgabe der vorliegenden Erfindung ist es, eine Vorrichtung und ein Verfahren zur thermischen Konditionierung von Vorformlingen bereitzustellen, die bei hoher Energieeffizienz die Ausbildung eines Temperaturprofils im Wandmaterial der Vorformlinge verbessern.

Die Aufgabe wird gelöst durch einen Heizkasten mit den Merkmalen des Anspruchs 1, durch eine Heizeinrichtung mit den Merkmalen des Anspruchs 13, sowie durch eine Blasmaschine gemäß Anspruch 14 und ein Verfahren mit den Merkmalen des Anspruchs 15. Vorteilhafte Ausgestaltungen sind in den Unteransprüchen angegeben.

Erfindungsgemäß ist ein Heizkasten zur thermischen Konditionierung von zur Blasformung vorgesehenen Vorformlingen aus thermoplastischem Material, bei dem zwei Seitenwände und eine Bodenwand einen Heiztunnel zum Durchtransport der Vorformlinge begrenzen, wobei der Heiztunnel mindestens zwei parallel zueinander verlaufende Heizgassen aufweist, und wobei zwischen zwei nebeneinander, insbesondere parallel zueinander verlaufenden Heizgassen eine Heizeinheit mit mehreren, in Transportrichtung der Vorformlinge längsausgerichteten, stabförmigen Heizelementen angeordnet ist.

Der Heiztunnel bildet insbesondere einen gemeinsamen, beide Heizgassen umfassenden Strahlungsraum aus. Dadurch wird ermöglicht, dass zwei nebeneinander verlaufende Heizgassen mittels einer einzigen, zwischen den beiden benachbarten Heizgassen angeordneten Heizeinheit gleichzeitig mit Wärmestrahlung versorgt werden. Ein solcher Heiztunnel ist aus der DE 24 27 611 A1 bekannt. In Heizkästen herkömmlicher Bauweise ist für jede Heizgasse eine eigene Heizeinheit vorgesehen, die auf ihrer ersten Seite in direktem Sichtkontakt mit den in der Heizgasse transportierten Vorformlingen steht und auf ihrer gegenüberliegenden Seite gegen einen Strahlungsreflektor strahlt. Einen solchen Heizkasten herkömmlicher Bauart zeigt z.B. die WO 2014/208693 A1. In dem erfindungsgemäßen Aufbau hingegen steht die zwei benachbarte Heizgassen trennende Heizeinheit zu beiden Seiten in direktem Sichtkontakt mit den in den zwei Heizgassen transportierten Vorformlingen, sodass also zwei Heizgassen gleichzeitig von einer einzigen, zu beiden Seiten Vorformlinge erwärmenden Heizeinheit erfasst werden können. Die in eine erste Heizgasse strahlenden Heizelemente einer Heizeinheit können also auch eine Wärmestrahlung in die benachbarte zweite Heizgassen abgeben.

Erfindungsgemäß ist zudem vorgesehen, dass die Heizeinheiten jeweils zwei säulenartige Tragelemente zur Halterung der Heizelemente aufweisen, wobei jedes der Tragelemente an jedem seiner in Längsrichtung gegenüberliegenden freien Enden einen Durchlass aufweist, die einen kanalartigen Längsschacht der Tragelemente öffnen, derart, dass eine Fluidströmung durch den Längsschacht der Tragelemente ermöglicht ist.

Wie sich aus verschiedenen Tests herausgestellt hat, können bei der Beheizung von an zwei Seiten der Heizeinheit vorbeigeführten Vorformlingen besonders gute Ergebnisse zur der Ausbildung eines geeigneten Temperaturprofils erzielt werden, wenn die Heizeinheit mindestens eine stegförmige Strahlungsblende aufweist, die längsausgerichtet zu den Heizelementen zwischen zwei benachbarten Heizelementen angeordnet ist.

Die stegförmige Strahlungsblende ist längs zwischen zwei übereinander angeordneten Heizelementen gelagert. Dabei wird ein Teil der von den Heizelementen abgestrahlten Primärstrahlung abgeschirmt. Solche Strahlungsblenden verhindern in erster Hinsicht eine unerwünschte Einstrahlung von Heizstrahlung in das benachbarte Heizelement. Damit können die benachbarten Heizelemente gegen Überhitzung geschützt werden. Damit kann auch der Abstand zwischen zwei benachbarten Heizelementen verringert werden, was auch die Unterbringung einer höheren Anzahl von Heizelementen und/oder die Verwendung von leistungsstärkeren Heizelementen in der Heizeinheit ermöglicht. Außerdem kann mit den stegförmigen Strahlungsblenden Strahlung abgeschirmt werden, die in zur Ausbildung des Temperaturprofils ungünstiger Richtung auf den Vorformling auftreffen würde. Dabei kann insbesondere eine unerwünschte Überlagerung von Strahlung eines Heizelementes mit Strahlung eines oder mehrerer der übrigen Heizelemente verringert werden.

Vorzugsweise ist die stegförmige Strahlungsblende zumindest Abschnittsweise mit rechteckigem oder ovalem Querschnitt ausgebildet. Bei Verwendung eines rechteckigen Querschnitts kann die Strahlungsblende insbesondere flachstangenförmig ausgebildet sein, also insbesondere als längsausgedehnter stegförmiger Körper mit zwei flachen, parallel zueinander verlaufenden Flachflächen, deren senkrechter Abstand kleiner ist als die Querausdehnung des Körpers, in Flachflächenebene quer zu seiner Längsrichtung.

Als Strahlungsblende kommen unterschiedliche Materialien oder Körperformen in Frage. In einer Variante ist die stegförmige Strahlungsblende ein Körper aus einem Vollmaterial.

In weiterer Variante ist daran gedacht, dass der Strahlungsblendenkörper mehrschichtig aufgebaut ist. Denkbar ist beispielsweise ein Schichtaufbau mit mindestens einer Quarzglasschicht und mindestens einer weiteren Blendmaterialschicht. Die Blendmaterialschicht enthält vorzugsweise ein Material, das einen, insbesondere im Wellenlängenbereich von Infrarot- (IR) oder Nahinfrarot- (NIR) Strahlung, hohen Reflexionskoeffizienten aufweist.

Die Strahlungsblende kann insbesondere ein mit einem Füllmaterial gefülltes Quarzglasrohr sein.

Zur Herstellung einer erfindungsmäßen Strahlungsblende ist daran gedacht, dass ein Quarzglasrohr in eine ovale oder rechteckige Form geformt wird und anschließend mit einem insbesondere im Wellenlängenbereich von Infrarot- (IR) oder Nahinfrarot- (NIR) Strahlung reflektierenden Material gefüllt wird. Es ist denkbar, das Füllmaterial in fester, pulvriger oder flüssiger Form in das Quarzglasrohr zu füllen. Schließlich wird die Einfüllöffnung zu verschließen.

In einer alternativen Ausgestaltung ist daran gedacht, dass ein Quarzglasrohr zunächst mit einem wie erwähnt im Wellenlängenbereich von Infrarot- (IR) oder Nahinfrarot- (NIR) Strahlung reflektierenden Material gefüllt wird und anschließend in eine ovale oder rechteckige Form geformt werden.

Das Füllmaterial kann vorzugsweise ein Metalloxidpulver wie zum Beispiel ein Titanoxid sein bzw. ein Oxidkeramik-Pulver sein. Denkbar ist die Verwendung eines Siliziumdioxid-Pulvers.

Als besonders vorteilhaft hat sich herausgestellt, wenn das Füllmaterial eine bezüglich der von den Heizelementen abgestrahlten Wärmestrahlung besonders niedrige Absorptionsfähigkeit aufweist. Das Füllmaterial sollte vorzugsweise also eine niedrige Wärmekapazität aufweisen.

Die aus einem mit einem Füllmaterial gefüllten Quarzglasrohr hergestellte Strahlungsblende kann auch in anderen, hier nicht erläuterten Verwendungen Einsatz finden. Eine derartige Strahlungsblende sowie dazu erläuterte Ausführungsformen und Herstellungsverfahren insbesondere in Verbindung mit einer, mehrere übereinander angeordnete stabförmige Heizelemente aufweisende Heizeinheit - wie zum Beispiel hier beschrieben - können eigenständiger Erfindungsgegenstand sein.

Als Heizgasse wird insbesondere ein Durchgang in einem Heizkasten verstanden, durch den Vorformlinge transportierbar sind.

Zur Kühlung hitzeempfindlicher Bereiche der Heizelemente kann vorgesehen sein, dass jedes der stabförmigen Heizelemente an seinen in Längsrichtung gegenüberliegenden Endbereichen an den Tragelementen gehaltert ist, derart, dass die freien Enden der Heizelemente jeweils in die Längsschächte der Tragelemente ragen.

In einer bevorzugten Ausführungsform ist daran gedacht, dass der Längsschacht zur Kühlung der in den Längsschacht angeordneten bzw. ragenden Elemente wie die elektrischen Anschlüsse der vorzugsweise als Strahlerröhren ausgebildeten Heizelemente, die Endbereiche der Heizelemente und/oder andere Komponenten mit einem gasförmigen Kühlfluid durchströmt wird. Denkbar ist auch, dass der Längsschacht von einem flüssigen Kühlfluid durchströmt wird. Entsprechend ist daran gedacht, die Längsschächte gas- und/oder flüssigkeitsdicht auszugestalten. Dabei können insbesondere auch gas- und/oder flüssigkeitsdichte Dichtelemente zur Abdichtung zwischen Längsschacht und Heizelement vorgesehen sein.

Bei einer bevorzugten Ausführungsvariante ist vorgesehen, dass der Heizkasten an zwei sich gegenüberliegenden Seiten und am Boden durch Wärmestrahlung reflektierende Reflektoren begrenzt ist. Etwa mittig sind in einer Ebene parallel übereinander Heizelemente angeordnet, so dass sich beidseitig zu der durch die Heizelemente aufgespannten Heizebene jeweils eine separate Transportgasse ergibt. In diesen Transportgassen wird jeweils eine Reihe von Vorformlingen hindurchgeführt.

Insbesondere ist vorgesehen, dass die Heizelemente als IR- (Infrarot) oder NIR-(Nahinfrarot) Strahler ausgeführt sind. In vorteilhafter Weise können die Heizelemente gerade und stabförmig ausgeführt sein, wobei die geraden Endbereiche der Heizelemente in den Tragelementen der Heizeinheit gehaltert sind. Vorzugsweise weisen die Tragelemente hochreflektierende Oberflächen für Wärmestrahlung auf.

Erfindungsgemäß weisen diese Tragelemente einen Längsschacht auf und sind oben und unten offen, so dass in dem Längsschacht ein Kamineffekt entsteht, der eine gewünschte Kühlung für die elektrischen Anschlüsse der Heizelemente mit besonders geringem Kühlmitteleinsatz erlaubt. Dabei wird verhindert, dass nennenswerte Mengen einer Kühlluft in den Heizraum beziehungsweise in die Heizgassen des Heizkastens gelangen. Zur Unterstützung des Kamineffekts kann vorgesehen sein, die Kühlluft zwangsweise durch die Tragelemente zu führen, zum Beispiel unter Erzeugung eines Druckgefälles zwischen den Durchlässen der Tragelemente.

Zur weiteren Verbesserung der Temperaturprofilierung der an der Heizeinheit vorbeigeführten Vorformlinge kann vorgesehen sein, zwischen den übereinanderliegenden Heizelementen reflektierende Abschirmflächen beziehungsweise - bleche anzuordnen. Alternativ oder zusätzlich können auf den Heizelementen Wärmestrahlung reflektierende Beschichtungen vorgesehen sein, die eine gewünschte Verteilung der Wärmestrahlung in der Heizgasse erlauben.

Es kann vorgesehen sein, die Vorformlinge gegenläufig oder gleichläufig durch die nebeneinander liegenden Heizgassen hindurchzuführen. Einzelheiten zu bevorzugten Ausgestaltungsvarianten werden im Folgenden erläutert.

Bei einer Ausbildung einer Doppelgasse für zwei nebeneinander geführten Vorformlingsreihen, die durch eine Heizeinheit getrennt sind, trifft nahezu die gesamte Primärstrahlung der Heizelemente zunächst auf Vorformlinge und nicht - wie in bekannten Heizvorrichtungen - im Wesentlichen zur Hälfte zuerst auf einen rückseitigen Reflektor. Gerade im Vergleich zu Reflektoren mit geringen beziehungsweise schlechten Reflexionseigenschaften wird dadurch signifikant mehr Energie in Form von Wärme in den Vorformlingen deponiert.

Außerdem kann die Beladungsdichte in der Heizstrecke deutlich gesteigert werden. Immerhin können in den erfindungsgemäßen Heizkästen doppelt so viele Vorformlinge geführt werden als in einem Heizkasten mit seitlich angeordneten Heizelementen. Damit verbessert sich das Verhältnis von zu erhitzendem Material zu verlustbehafteter Reflektorfläche und es verbessert sich somit der Anteil der gesamten Strahlungsenergie, die an gewünschter Stelle in den Vorformlingen deponiert wird.

Vorteilhaft ist auch, dass die Heizgasse des erfindungsgemäßen Heizkastens mit ausschließlich ebenen Reflektorflächen ausgestattet sein kann. Auf das üblicherweise verwendete W-Profil kann bei den erfindungsgemäßen Heizkästen mit Doppelgasse verzichtet werden. Ebene Reflektorflächen sind besonders einfach und kostengünstig herstellbar.

Für den Anschluss der Heizeinheiten an eine Stromquelle und/oder an eine Steuereinheit des Heizkastens kann vorgesehen sein, dass jedes der stabförmigen Heizelemente einer Heizeinheit in seiner an den Tragelementen gehalterten Gebrauchsstellung elektrisch leitend an einen gemeinsamen Steckkontakt der Heizeinheit angeschlossen ist.

Es ist daran gedacht, die Heizelemente als Wärmestrahler, insbesondere als IR/NIR-Strahler auszuführen. Derartige Strahler sind typischerweise als Glaskolben mit innenliegender Glühwendel ausgeführt. Die freien Enden des Glaskolbens sind zur Vermeidung von Gaseintritt bzw. -austritt verschlossen, wobei in den Verschlussbereichen angeordnete elektrische Kontaktelemente mit der Glühwendel kontaktiert sind, um die Glühwendel von außerhalb des Glaskolbens mit einem Strom zu beaufschlagen. Die Kontaktelemente sind zum Beispiel aus Molybdän ausgebildet. Zur Stromversorgung sind die Kontaktelemente typischerweise mittels elektrischer Leiter bzw. Kabel an einen Steuerschaltkreis angeschlossen. Vorzugsweise ist die Stromversorgung der Heizelemente mittels einer Steuervorrichtung einstellbar. Die elektrischen Leiter bzw. Kabel sind vorzugsweise stoffschlüssig an die Kontaktelemente angeschlossen. Zum Schutz der freien Enden der Heizelemente und/oder für die formschlüssige Halterung der Heizelemente an den Tragelementen können an ihren freien Enden Halteelemente vorgesehen sein. Diese Halteelemente können beispielsweise aus einer Keramik oder einem anderen hitzebeständigen Material hergestellt sein.

Mit einer Kontaktierung der Heizelemente einer Heizeinheit an einen gemeinsamen Steckkontakt wird eine einfache Montage beziehungsweise Demontage einer Heizeinheit in einem Heizkasten unterstützt. Insbesondere ist vorgesehen, dass über den gemeinsamen Steckkontakt die einzelnen Heizelemente einer Heizeinheit separat mit einem Strom beaufschlagbar sind. Zur Einstellung eines gewünschten Heizprofils können die einzelnen Heizelemente somit über eine Zentrale und/oder über eine dezentrale Steuerungsvorrichtung gesteuert werden.

In einer bevorzugten Ausgestaltung kann vorgesehen sein, dass die Heizeinheiten modulartig ausgebildet sind, so dass sie zum Austausch oder für Wartungs- und/oder Montagearbeiten aus den Heizkästen herausnehmbar sind. Für die modulartige Ausgestaltung der Heizeinheiten können insbesondere leicht zugängliche Befestigungsmittel vorgesehen sein, die einen sicheren Halt der Heizeinheit in dem Heizkasten gewährleisten und gleichzeitig eine einfache Lösung beziehungsweise Befestigung in dem Heizkasten erlauben. In einer Variante ist daran gedacht, dass die Heizeinheiten ein Bodenelement aufweisen, das beim Einsatz in den Heizkasten einen Bodenbereich des Heizkastens ausbildet. Bevorzugt ist daran gedacht, dass das Bodenelement der Heizeinheit aus einem Wärmestrahlung reflektierenden Material hergestellt ist, jedenfalls wärmedämmend ausgebildet ist.

Für den einfachen Austausch von Heizelementen bzw. zur Erleichterung von Montage- und/oder Wartungsarbeiten kann vorgesehen sein, dass die Tragelemente jeweils ein abnehmbares Deckelelement aufweisen, mit dem ein seitlicher Zugang zum Längsschacht freigebbar ist. Mit der Verwendung eines abnehmbaren Deckelelementes kann zum Beispiel der Austausch von defekten Heizelementen erleichtert werden.

Zur sicheren Halterung der Heizelemente an den Tragelementen ist bevorzugt vorgesehen, dass die Heizelemente in ihren Endbereichen Haltekörper aufweisen, die formschlüssig in Aufnahmeöffnungen der Tragelemente einsteckbar sind. Für eine formschlüssige Halterung der Heizelemente an den Tragelementen kann zum Beispiel vorgesehen sein, dass die Haltekörper Führungsrillen aufweisen, die passgenau in Führungsnuten an den Aufnahmeöffnungen laufen.

Für eine einfache Montage und Austauschbarkeit der Heizelemente kann vorgesehen sein, dass die Aufnahmeöffnungen kammartig als seitlich geöffnete Einschübe in einen Wandbereich des Tragelements eingearbeitet sind. Die seitlichen Einschübe sind besonders bevorzugt bei Tragelementen mit Deckelelementen. Das Deckelelement kann derart an dem Tragelement angeordnet sein, dass die Einschübe in der Geschlossenstellung verdeckt sind. In der Offenstellung können die Heizelemente zur Wartung bzw. zum Austausch leicht entnommen werden.

Für eine flexible Einstellbarkeit der Wärmeverteilung innerhalb der Heizkästen ist daran gedacht, dass die Wandbereiche mit den Aufnahmeöffnungen zumindest bei den Tragelementen einiger der Heizeinheiten längsverschiebbar an den Tragelementen gelagert sind. Die Längsverschieblichkeit der Wandbereiche mit den Aufnahmeöffnungen hat den vorteilhaften Effekt, dass die Heizelemente in den Heizeinheiten höhenverstellbar sind. Durch die Möglichkeit einer Höhenverstellung lässt sich auf einfache Weise ein gewünschtes Heizprofil einstellen bzw. anpassen. Außerdem lassen sich die Wandbereiche mit den Aufnahmeöffnungen besonders einfach austauschen, ohne die Tragelemente als Ganzes von den Heizeinheiten zu entfernen. Somit können beispielsweise Wandbereiche mit unterschiedlich beabstandeten Aufnahmeöffnungen vorgesehen sein, um mit einer bestimmten Beabstandung der Heizelemente das Heizprofil eines Heizkastens nach Bedarf anzupassen.

Zur Erzeugung einer vorteilhaften Wärmeverteilung und zur Erhöhung des Wirkungsgrades des Heizprozesses kann vorgesehen sein, dass zwei sich gegenüberliegende Seitenwände der Heizkästen mit den zwei parallel zueinander verlaufenden Heizgassen Wärmestrahlung reflektierende Elemente aufweisen. Das können vorzugsweise ebene Reflektorflächen sein. Alternativ oder zusätzlich können auch gekrümmte Reflektorflächen vorgesehen sein. Auch der von den Seitenwänden begrenzte Bodenbereich kann derartige Reflektorflächen aufweisen. Bevorzugt, sind die Seitenwände und/oder der Bodenbereich vollständig oder zumindest bereichsweise als Reflektorfläche ausgebildet.

Zur Erzeugung eines Luftstroms durch die Längsschächte der Tragelemente ist daran gedacht, dass unterhalb des Heizkastens ein Kühlkanal angeordnet ist, der kommunizierend mit den Längsschächten der Tragelemente verbunden ist. Insbesondere ist daran gedacht, bei einer Aneinanderreihung mehrerer Heizkästen zur Ausbildung einer Heizstrecke, einen gemeinsamen Kühlkanal unterhalb der Heizkästen vorzusehen. Durch einen gemeinsamen Kühlkanal unterhalb der Heizkästen können die Tragelemente in einfacher und effizienter Weise mit Kühlluft versorgt werden. Die in dem Kühlkanal geführte Kühlluft kann mit Druck beaufschlagt sein, um den Kamineffekt in den Tragelementen zu unterstützten. Alternativ zu einem gemeinsamen Kühlkanal ist denkbar, dass die Tragelemente mit einzelnen, voneinander separiert ausgeführten Kühlkanälen mit Kühlluft versorgt werden.

Für den Transport der Vorformlinge durch eine Heizeinrichtung mit erfindungsgemäßen Heizkästen ist daran gedacht, dass die Heizvorrichtung Fördermittel umfasst, mit denen die Vorformlinge in einer ersten Variante einreihig durch die Heizkästen bewegbar sind, derart, dass die Vorformlinge in nebeneinander liegenden Heizgassen der Heizkästen in entgegengesetzte Richtungen zwangsgeführt sind. Derartige Fördermittel können zum Beispiel die üblicherweise in Heizvorrichtungen dieser Art verwendeten Tragdorne umfassen. In zweiter Variante ist daran gedacht, dass die Vorformlinge in zwei nebeneinander liegenden Heizgassen in gleicher Transportrichtung durch die Heizkästen geführt werden. In bevorzugter Ausgestaltung ist vorgesehen, dass die Vorformlinge an Transportdornen hängend durch die Heizgassen der Heizkästen transportiert werden.

Erfindungsgemäß ist auch eine Heizeinrichtung mit mehreren, zur Ausbildung einer Heizstrecke aneinander angrenzend angeordneten Heizkästen in einer der zuvor genannten Varianten sowie eine Blasmaschine mit einem Heizkasten oder einer Heizeinrichtung nach einer der zuvor genannten Varianten. Insbesondere ist daran gedacht, die Heizvorrichtung in einer Streckblasmaschine zu verwenden. Vorteile und bevorzugte Ausgestaltung der erfindungsgemäßen Blasmaschine ergeben sich auch aus den zur erfindungsgemäßen Heizvorrichtung erläuterten Details.

Erfindungsgemäß ist zudem ein Verfahren zur Ausbildung eines Temperaturprofils in dem Wandmaterial von zur Blasformung vorgesehenen Vorformlingen aus thermoplastischem Material bei dem Vorformlinge in nebeneinander geführten Transportreihen durch einen an mindestens drei Seiten durch Wandelemente begrenzten Heizkasten bewegt werden, wobei die Transportreihen jeweils durch eine Heizgasse des Heizkastens geführt werden und wobei zwischen zwei benachbarten Heizgassen ein Heizelement angeordnet ist, das das Material der zu beiden Seiten vorübergeführten Vorformlinge zur Ausbildung des Temperaturprofils erwärmt. Erfindungsgemäß wird zur thermischen Konditionierung der Vorformlinge ein Heizkasten in einer der zuvor genannten Varianten verwendet. Weitere Vorteile und bevorzugte Ausgestaltung des erfindungsgemäßen Verfahrens ergeben sich auch aus den zum erfindungsgemäßen Heizkasten erläuterten Details.

Ausführungsbeispiele der Erfindung sind in den Zeichnungen schematisch dargestellt. Es zeigen:
- Fig. 1: ein erfindungsgemäßer Heizkasten in perspektivischer Ansicht von schräg oben,
- Fig. 1A: ein erfindungsgemäßer Heizkasten in einer stark schematisierten Darstellung mit Blick entlang der vorgesehenen Transportrichtung,
- Fig. 2: eine erfindungsgemäße Heizeinheit in perspektivischer Ansicht von schräg oben,
- Fig. 3: eine erfindungsgemäße Heizeinheit mit freigelegten Bauteileinheiten,
- Fig. 4: Detailansichten von Tragelementen erfindungsgemäßer Heizeinheiten mit geöffnetem Längsschacht,
- Fig. 5: eine Detailansicht eines Tragelements mit geschlossenem Längsschacht,
- Fig. 6: eine stark schematisierte Darstellung einer erfindungsgemäßen Heizeinheit in einer Seitenansicht,
- Fig. 7: eine Schnittdarstellung der Heizeinheit aus Fig. 6 entlang der Schnittlinie 7-7,
- Fig. 8: Querschnitt durch eine erfindungsgemäße stegförmige Strahlungsblende,
- Fig. 9: eine mit erfindungsgemäßen Heizkästen ausgebildete Heizstrecke in einer ersten Variante schematisch in der Draufsicht,
- Fig. 10A: eine Heizstrecke mit erfindungsgemäßen Heizkästen in einer zweiten Variante in ein einer schematischen Draufsicht,
- Fig. 10B: eine Heizstrecke mit erfindungsgemäßen Heizkästen in einer Abwandlung der zweiten Variante in ein einer schematischen Draufsicht, und
- Fig. 11: eine Heizstrecke mit erfindungsgemäßen Heizkästen in einer dritten Variante in einer schematischen Draufsicht.

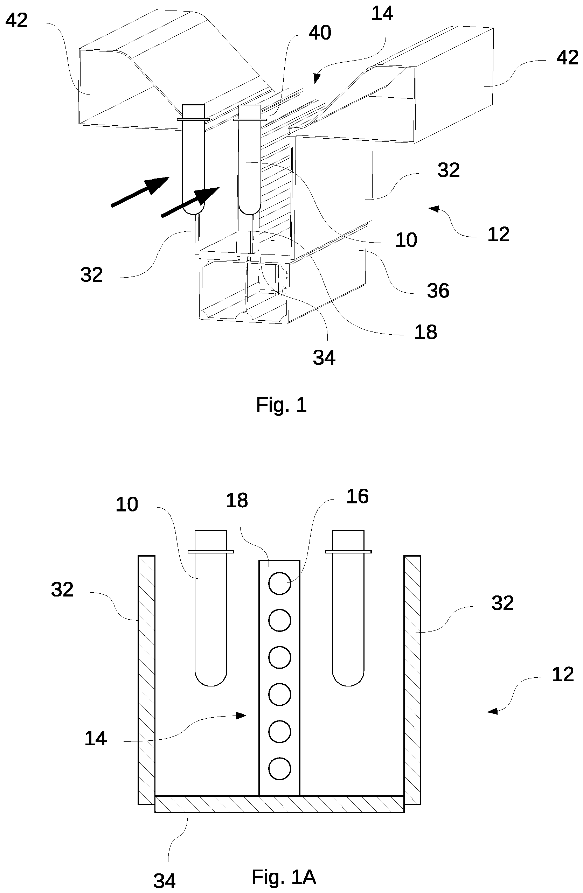

Fig. 1 ist eine isometrische Darstellung eines erfindungsgemäßen Heizkastens 12. Der Heizkasten 12 begrenzt mit zwei sich gegenüberliegenden Seitenwänden 32 und einer Bodenwandung 34 zwei parallel zueinander verlaufende Heizgassen für den Durchtransport von Vorformlingen 10. Etwa mittig des Heizkasten zwischen den Heizgassen ist eine Heizeinheit 14 mit zur Transportrichtung der Vorformling 10 längsausgerichteten Heizelementen 16 angeordnet. Die Vorformlinge 10 werden mit nicht dargestellten Fördermitteln durch die Heizgassen geführt. Denkbar ist dabei in erster Variante ein Durchtransport der Vorformlinge 10 in gleicher Richtung, wie durch die in Fig. 1 gezeichneten Pfeile. In zweiter Variante ist ein Durchtransport der Vorformlinge durch nebeneinander liegenden Heizgassen in entgegengesetzten Richtungen.

Unterhalb des Heizkastens 12 ist ein Kühlkanal 36 gezeigt, der kommunizierend mit Tragelementen 18 der Heizeinheit 14 verbunden ist. Bei einer Druckbeaufschlagung des Kühlkanals 12, zum Beispiel durch ein Gebläse oder dergleichen, strömt das in den Kühlkanal 36 geführte Kühlmedium in die Tragelemente 18 der Heizeinheit 14 und entweicht am oberen Ende der Tragelemente 18 in die Umgebung des Heizkastens 12. Am oberen Ende der Heizeinheit 14 ist ein Ablenkblech 40 vorgesehen, das die aus den Tragelementen 18 ausströmende Kühlluft zur Vermeidung von unerwünschter Vermischung mit anderen Luftmassen in bestimmte Richtung ablenkt. Wie gezeigt, kann vorgesehen sein, dass in Transportrichtung der Vorformlinge 10 jeweils seitlich des Heizkastens 12 weitere Kühlkanäle 42 angeordnet sind, die einen zum Beispiel schlitzartigen Auslass auf Höhe der Verschlussbereiche der Vorformlinge 10 aufweist. Bei der Druckbeaufschlagung dieser seitlichen Kühlkanäle 42 kann eine Kühlluft aus den schlitzartigen Auslässen austreten und zur Kühlung der Verschlussbereiche der Vorformlinge 10 dienen. Die beim Transport durch die Heizgasse insbesondere oberhalb eines oberen Randbereiches des Heizkastens 12 gehaltenen Verschlussbereiche bzw. Mündungsbereiche der Vorformlinge 10 sind gut erkennbar in der schematischen Abbildung des Heizkastens 12 in Fig. 1a.

Fig. 1A zeigt einen erfindungsgemäßen Heizkasten 12 in einer strak schematisierten Ansicht entlang der Transportrichtung der Vorformlinge 10. Etwa mittig ist die Heizeinheit 14 angedeutet, mit einem im Hintergrund gezeigten Tragelement 18 und in Zeichnungsebene davorliegend angedeuteten Heizelementen 16. Zum Prinzipverständnis sind in Fig. 1a - wie auch zum Teil in anderen Figuren - nur ausgewählte Komponenten der beanspruchten Erfindung gezeigt. Vorliegend ist erkennbar, dass die Vorformlinge 10 in einem Abstand zum Boden 34 in den Transportbahnen des Heizkastens 12 transportiert werden. Insbesondere ist vorgesehen, die Vorformlinge 10 aufrecht mit ihrem Mündungsbereich in Lotrichtung nach oben weisend an den Heizeinheiten 14 vorbeizuführen. Insbesondere derart, dass die Mündungsbereiche mit einem unterhalb des Mündungsbereiches angeordneten Neckrings oberhalb der Heizelemente 14 bzw. oberhalb der Heizelemente 16 gehalten sind.

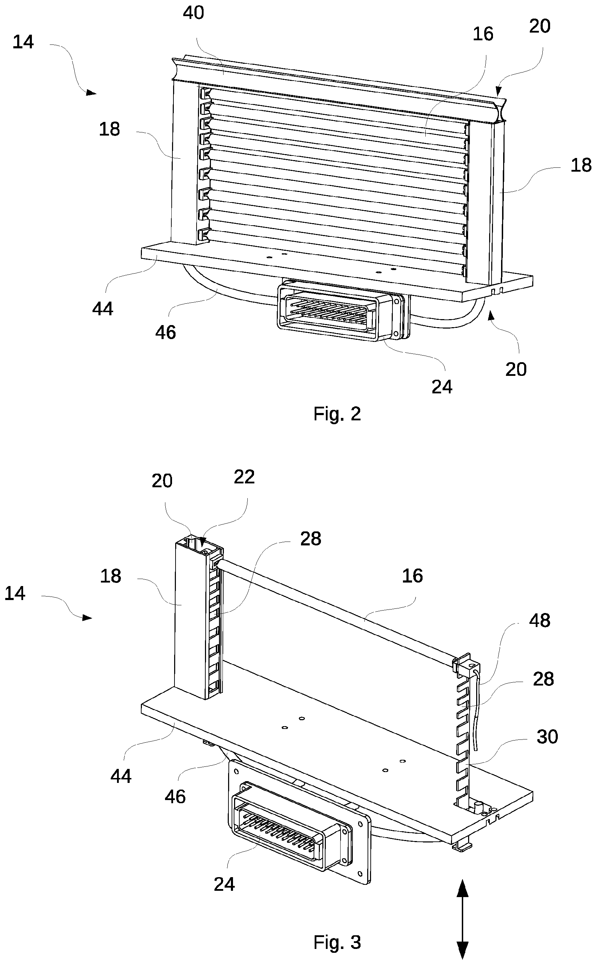

Fig. 2 zeigt in einer isometrischen Darstellung eine erfindungsgemäße Heizeinheit 14 mit längsausgerichteten, stabförmig geraden Heizelementen 16, die an zwei Tragelementen 18 gehaltert sind. Die Tragelemente 18 haben eine etwa säulenartige Struktur und sind auf einem Bodenelement 44 der Heizeinheit 14 befestigt. Unterhalb des Bodenelements 44 ist ein Steckkontakt 24 angeordnet, der über einen Kabelstrang 46, umfassend Kabel 48 elektrisch leitend mit den Heizelementen 16 verbunden ist. Die den Steckkontakt 24 mit den einzelnen Heizelementen 16 elektrisch verbindenden Kabel 48 sind in den Längsschächten 22 der Tragelemente 18 geführt. Deutlich dargestellt sind die Kabel 48 in Fig. 3. Oberhalb der Tragelemente 18 ist das Ablenkblech 40 angeordnet, das einen durch die Tragelemente 18 geführten Luftstrom kontrolliert in die Umgebung oberhalb der Heizeinheit 14 ableitet. Wie in Fig. 1 angedeutet, kann das Bodenelement 44 die Bodenwandung 34 des Heizkastens 12 ausbilden. Zumindest kann das Bodenelement 44 Bestandteil der Bodenwandung 34 des Heizkastens 12 sein bzw. eine Schicht des Bodenbereiches 34 ausbilden.

Fig. 3 zeigt eine erfindungsgemäße Heizeinheit 14 in einer isometrischen Darstellung mit zeichnerisch freigelegten Details. Zur besseren Veranschaulichung sind die Wandbereiche des in Zeichnungsebene vorderen Tragelements 18 weggelassen. An dem in Zeichnungsebene hinteren dargestellten Tragelement 18 gut erkennbar ist der obere Durchlass 20, der einen Längsschacht 22 des Tragelements 18 freigibt. An der Innenseite des Tragelements 18 sind Aufnahmeöffnungen 28 gezeigt, in die die Heizelemente 16 formschlüssig einsteckbar sind. In Zeichnungsebene rechts ist der Wandbereich 30 des vorderen Tragelements 18 mit den Aufnahmeöffnungen 28 zeichnerisch freigestellt gezeigt. Wie gezeigt, können die Aufnahmeöffnungen 28 als seitlich geöffnete Einschübe etwa kammartig in den Wandbereich 30 eingearbeitet sein. Dies erleichtert die Montage der Heizelemente 16, die in geeigneter Weise seitlich, vorzugsweise formschlüssig in die Aufnahmeöffnungen 28 eingeschoben werden können. Durch eine geeignete Wahl der Abstände zwischen den übereinander angeordneten Aufnahmeöffnungen 28 des Wandbereichs 30 kann das auf die Vorformlinge 10 eingeprägte Temperaturprofil beeinflusst werden.

Mit dem Doppelpfeil unterhalb des die Aufnahmeöffnungen 28 aufweisenden Wandbereichs 30 ist angedeutet, dass die Wandbereiche 30 höhenverstellbar an der Heizeinheit 14 angeordnet sein können. Dafür kann vorgesehen sein, dass die Wandbereiche 30 längsverschieblich in den Tragelementen 18 gelagert sind. Beispielsweise kann der Wandbereich 30 in einer Nut der Tragelemente 18 geführt sein.

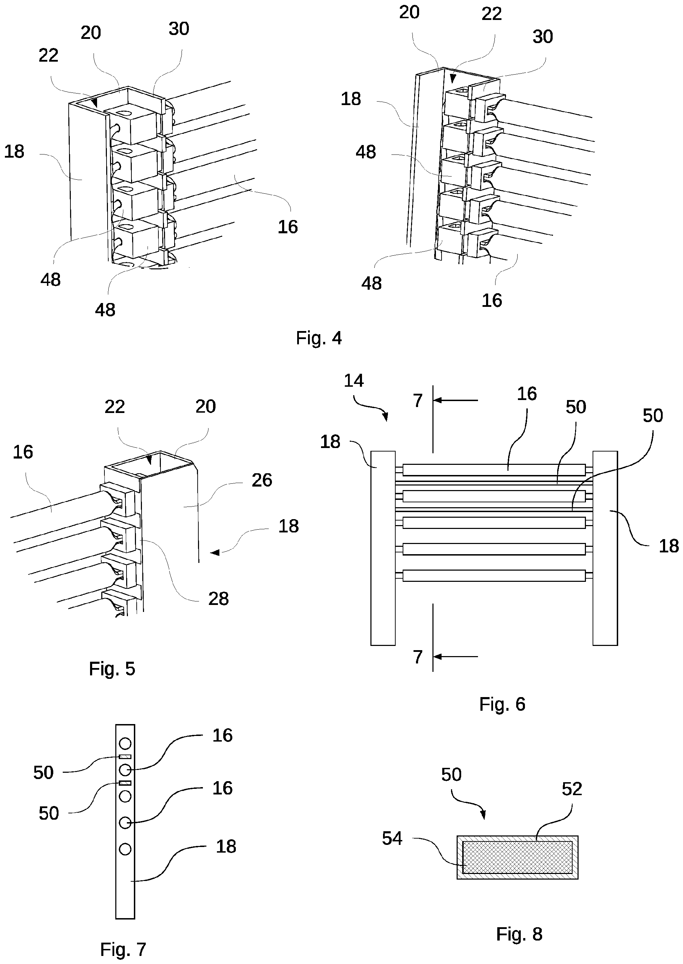

Fig. 4 und 5 zeigen Detailansichten eines Tragelementes 18 mit daran gehalterten Heizelementen 16. Gut erkennbar ist, dass die Heizelemente 16 in seitlich, also quer zur Längsrichtung geöffnete Aufnahmeöffnungen 28 der Tragelemente 18 eingeschoben sind. Wie in Fig. 5 gezeigt, kann der in Fig. 4 geöffnet gezeigte Längsschacht 22 des Tragelements 18 mit einem Deckelelement 26 verschließbar ausgebildet sein.

Fig. 6 zeigt eine erfindungsgemäße Heizeinheit 14 mit stabförmig ausgebildeten Heizelementen 16 in stark schematisierter Darstellung in Seitenansicht. Die Heizelemente 16 sind längsausgerichtet zwischen zwei Tragelementen 18 angeordnet, wobei die Endbereiche der Heizelemente 16 jeweils an den Tragelementen 18 gehaltertet sind. Vorliegend ist die Heizeinheit 14 mit fünf Heizelementen 16 ausgestattet.

Wie diese Ausführungsvariante zeigt, können stegförmige Strahlungsblenden 50 vorgesehen sein, die jeweils zwischen zwei benachbarten Heizelementen 16 angeordnet sind. Vorliegend sind zwei Strahlungsblenden 50 gezeigt, die zwischen einem ersten und einem zweiten Heizelement 16 und zwischen dem zweiten und einem dritten Heizelement 16 angeordnet sind. Ohne weiteres können weitere Strahlungsblenden 50 an der Heizeinheit 14 vorgesehen sein, die zwischen weiteren Heizelementen 16 angeordnet sind.

Fig. 7 zeigt schematisch eine Schnittdarstellung der Heizeinheit 14 aus Fig. 6 entlang der Schnittlinie 7 - 7. Der Schnitt ist mit Blick in Längsrichtung der stabförmigen Heizelemente 16 gezeigt. Die vorliegend mit rechteckigem Querschnitt ausgebildeten Strahlungsblenden 50 sind symmetrisch zur Stapelebene der Heizelemente 16 ausgerichtet. Strahlung, die von den stabförmigen Heizelementen 16 in radiale Richtung abgestrahlt wird, wird von den Strahlungsblenden 50 bereichsweise abgeschirmt. Wie insbesondere in Figur 7 erkennbar, blockiert eine zwischen einem ersten Heizelement 16 und einem zweiten Heizelement 16 angeordnete Strahlungsblende 50 den Strahlungsweg zwischen diesen Heizelementen, sodass sich die benachbarten Heizelemente 16 nicht gegenseitig durch Direktstrahlung aufheizen.

Die Strahlungsblenden 50 können in Richtung quer zu ihrer Längsausdehnung eine Breite haben, die geringer ist, als der Durchmesser eines der benachbarten Heizelemente 16. Bereits bei geringer Breite wird ein Großteil der Strahlung eines Heizelementes 16 die in Richtung des benachbarten Heizelementes 16 abgestrahlt wird, blockiert. Vorzugsweise entspricht die Breite einer Strahlungsblende 50 in ihrer Querausdehnung dem Durchmesser eines Heizelementes 16.

Die Strahlungsblenden 50 haben vorzugsweise geringe Wärme-Absorptionseigenschaften, die ein übermäßiges Aufheizen ihres Körpers verhindern. Die Strahlungsblenden 50 können insbesondere reflektierend für die von den Heizelementen 16 abgegebene Strahlung ausgebildet sein. Die Strahlungsblenden 50 können insbesondere richtungserhaltend und oder diffus reflektierend ausgebildet sein. Das wie vorliegend rechteckig ausgebildete Querschnittprofil verhindert eine ungewollte Fokussierung der auftreffenden Strahlung, sodass das an den Vorformlingen zu erzeugende Temperaturprofil nicht durch von den Strahlungsblenden reflektierte Strahlung unerwünscht verändert wird.

Fig. 8 zeigt eine erfindungsgemäße Strahlungsblende 50 im Querschnitt mit Blick längs ihrer Längsachse. Wie in Fig. 8 gezeigt, kann die Strahlungsblende 50 mehrschichtig ausgebildet sein. Vorliegend weist die Strahlungsblende 50 eine erste einhüllende Schicht 52 mit einem darin eingeschlossenen Blendmaterial 54 auf. Die Hüllschicht 52 bildet die erste Schicht und das Blendmaterial 54 bildet die zweite Schicht der Strahlungsblende 50 aus.

Vorzugsweise ist die Strahlungsblende 50 aus einer aus Quarzglas bestehenden Hüllschicht 52 und einem darin eingeschlossenen Blendmaterial 54 aufgebaut. Das Blendmaterial 54 ist bevorzugt ein Pulver, insbesondere ein Metalloxid oder eine Oxidkeramik. Diese Materialien haben sich als besonders hitzebeständig erwiesen, sodass mit dieser Konfiguration hohe Standzeiten einer erfindungsgemäßen Heizeinheit 14 erzielt werden können.

Der Längsschacht 22, der nach oben und nach unten mit Durchlässen 20 geöffnet ist, erzeugt bei der Beaufschlagung mit einer Kühlluft einen Kamineffekt, so dass die Endbereiche der Heizelemente 16, die bei der Halterung an den Tragelementen 18 in die Längsschächte 22 der Tragelemente 18 ragen, gekühlt werden. Zur Erzeugung des Kamineffekts, kann Kühlluft durch einen z.B. in Fig. 1 gezeigten Kühlkanal 36 unterhalb der Heizeinheit 14 durch den unteren Durchlass 20 der Tragelemente 18 in den Längsschacht 22 eingeleitet und an dem oberen Durchlass 20 der Tragelemente 18 ausgeleitet werden.

Die Figuren 4 und 5 zeigen verdeutlicht, dass an den Endbereichen der stabförmigen Heizelemente 16 Haltekörper 48 angeordnet sein können. An diesen Haltekörpern 48 sind vorzugsweise nutförmige Kerben eingearbeitet, die einen formschlüssigen Sitz an den Aufnahmeöffnungen 28 des Wandbereichs 30 verbessern. Dafür sind die Heizelemente 16 mit den Haltekörpern 48 seitlich in die Aufnahmeöffnungen 28 einsteckbar. Wie in den Fig. 4 und 5 gut erkennbar, kann vorgesehen sein, dass die Nut der Haltekörper 48 als eine an der Außenwandung des Haltekörpers 48 vollständig umlaufende Ringnut ausgebildet ist. Bei verschlossenem Tragelement 18 können Kantenbereiche der Tragelemente 18 sowie des Deckelelements 26 in die Nut des Halteelements 48 greifen, um einen Austritt von Kühlluft aus dem Längsschacht 22 in die Heizgasse bzw. in die Umgebung der Heizelemente 16 zu behindern.

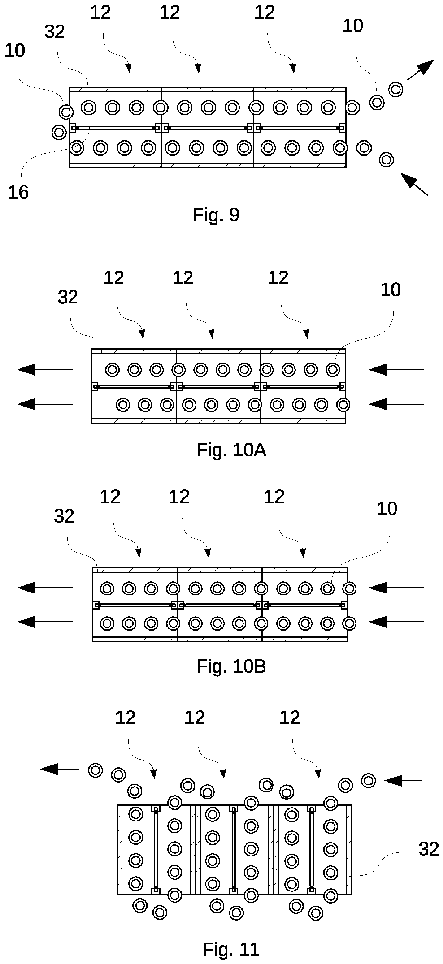

Die Fig. 9 - 11 zeigen rein schematisch beispielhaft die Ausbildung einer Heizstrecke mit aneinander gereihten Heizkästen 12. Die Pfeile zeigen jeweils die Transportrichtung der Vorformlinge 10. In Fig. 9 ist eine erste Variante gezeigt, bei der die Vorformlinge 10 einreihig bzw. einspurig durch die Heizgassen der Heizkästen 12 geführt werden. Wie in Fig. 9 gezeigt, kann vorgesehen sein, dass die Vorformlinge 10 in den Heizkästen 12 in jeweils entgegengesetzten Richtungen an dem vorliegend mittig zwischen den Transportbahnen angeordneten Heizeinheiten 14 vorbeitransportiert werden. In den Fig. 10A und 10B ist eine zweite Variante gezeigt, bei der die Vorformlinge 10 zumindest bereichsweise zweispurig bzw. zweireihig durch die Heizgassen der Heizkästen 12 geführt werden und zwar gleichgerichtet. Fig. 10A und 10B zeigen also eine zweireihige Führung durch die Heizkästen 12 in parallelen Transportreihen in gleichgerichteter Transportrichtung. Gemäß Fig. 10A kann vorgesehen sein, die Vorformlinge 10 in Transportrichtung versetzt zueinander durch die Heizgassen zu transportieren. In einer Abwandlung kann gemäß Fig. 10B vorgesehen sein, die Vorformlinge 10 in Transportrichtung auf gleicher Höhe durch die Heizgassen zu transportieren.

Fig. 11 zeigt eine Abwandlung der Heizstrecke aus Fig. 9, wobei die Heizkästen 12 seitlich aneinander angrenzend angeordnet sind. Im Unterschied zu der Variante aus Fig. 9 durchläuft ein Vorformling 10 beim Eingang in die Heizstrecke und beim Ausgang aus der Heizstrecke nicht denselben Heizkasten 12. Das ist besonders vorteilhaft, wenn am Eingang der Heizstrecke und am Ausgang der Heizstrecke unterschiedliche Temperaturprofile gewünscht sind. Die unterschiedliche Profilierung am Eingang und am Ausgang der Heizstrecke kann dabei durch die individualisierte Heizleistung bzw. die individuelle Konfiguration der Heizelemente 16 der Heizkästen am Anfang bzw. am Ende der Heizstrecke erreicht werden. Ein ähnlicher Vorteil ergibt sich auch bei der zweispurigen Führung der Vorformlinge 10 aus Fig. 10A und 10B.

### Bezugszeichenliste

- 10: Vorformlinge
- 12: Heizkasten
- 14: Heizeinheit
- 16: Heizelement
- 18: Tragelement
- 20: Durchlass
- 22: Längsschacht
- 24: Steckkontakt
- 26: Deckelelement
- 28: Aufnahmeöffnungen
- 30: Wandbereich mit Aufnahmeöffnungen
- 32: Seitenwand Heizkasten
- 34: Bodenwand Heizkasten
- 36: Kühlkanal
- 40: Ablenkblech
- 42: seitlicher Kühlkanal
- 44: Bodenelement
- 46: Kabelstrang
- 48: Haltekörper
- 50: Strahlungsblende
- 52: erste Schicht der Strahlungsblende
- 54: zweite Schicht der Strahlungsblende

## Patentansprüche

1. Heizkasten zur thermischen Konditionierung von zur Blasformung vorgesehenen Vorformlingen (10) aus thermoplastischem Material, bei dem zwei Seitenwände (32) und eine Bodenwand (34) einen Heiztunnel zum Durchtransport der Vorformlinge (10) begrenzen, wobei der Heiztunnel mindestens zwei parallel zueinander verlaufende Heizgassen aufweist, und wobei zwischen zwei nebeneinander, insbesondere parallel zueinander verlaufenden Heizgassen eine Heizeinheit (14) mit mehreren, in Transportrichtung der Vorformlinge (10) längsausgerichteten, stabförmigen Heizelementen (16) angeordnet ist, **dadurch gekennzeichnet, dass** die Heizeinheiten (14) jeweils zwei säulenartige Tragelemente (18) zur Halterung der Heizelemente (16) aufweisen, wobei jedes der Tragelemente (18) an jedem seiner in Längsrichtung gegenüberliegenden freien Enden einen Durchlass (20) aufweist, die einen kanalartigen Längsschacht (22) der Tragelemente (18) öffnen, derart, dass eine Fluidströmung durch den Längsschacht (22) der Tragelemente (18) ermöglicht ist.

2. Heizkasten nach Anspruch 1, **dadurch gekennzeichnet, dass** die Heizeinheit (14) mindestens eine stegförmige Strahlungsblende (50) aufweist, die längsausgerichtet zu den Heizelementen (16) zwischen zwei benachbarten Heizelementen (16) angeordnet ist.

3. Heizkasten nach einem der vorangegangenen Ansprüche, **dadurch gekennzeichnet, dass** jedes der stabförmigen Heizelemente (16) an seinen in Längsrichtung gegenüberliegenden Endbereichen an den Tragelementen (18) gehaltert ist, derart, dass die freien Enden der Heizelemente (16) jeweils in die Längsschächte (22) der Tragelemente (18) ragen.

4. Heizkasten nach einem der vorangegangenen Ansprüche, **dadurch gekennzeichnet, dass** jedes der stabförmigen Heizelemente (16) einer Heizeinheit (14) in seiner an den Tragelementen (18) gehalterten Gebrauchsstellung elektrisch leitend an einen gemeinsamen Steckkontakt (24) der Heizeinheit (14) angeschlossen ist.

5. Heizkasten nach einem der vorangegangenen Ansprüche, **dadurch gekennzeichnet, dass** die Heizeinheiten (14) modulartig ausgebildet sind, sodass sie zum Austausch oder für Wartungs- und/oder Montagearbeiten aus den Heizkästen (12) herausnehmbar sind.

6. Heizkasten nach einem der vorangegangenen Ansprüche, **dadurch gekennzeichnet, dass** die Tragelemente (18) jeweils ein abnehmbares Deckelelement (26) aufweisen, mit dem ein seitlicher Zugang zum Längsschacht (22) freigebbar ist.

7. Heizkasten nach einem der vorangegangenen Ansprüche, **dadurch gekennzeichnet, dass** die Heizelemente (16) in ihren Endbereichen Haltekörper (48) aufweisen, die formschlüssig in Aufnahmeöffnungen (28) der Tragelemente (18) einsteckbar sind.

8. Heizkasten nach Anspruch 7, **dadurch gekennzeichnet, dass** die Aufnahmeöffnungen (28) kammartig als seitlich geöffnete Einschübe in einen Wandbereich (30) des Tragelements (18) eingearbeitet sind.

9. Heizkasten nach Anspruch 8, **dadurch gekennzeichnet, dass** die Wandbereiche (30) mit den Aufnahmeöffnungen (28) zumindest bei den Tragelementen (18) einiger der Heizeinheiten (14) längsverschiebbar an den Tragelementen (18) gelagert sind.

10. Heizkasten nach einem der vorangegangenen Ansprüche, **dadurch gekennzeichnet, dass** zwei sich gegenüberliegende Seitenwände (32) des Heizkastens (12) Wärmestrahlung reflektierende Elemente aufweisen.

11. Heizkasten nach einem der vorangegangenen Ansprüche, **dadurch gekennzeichnet, dass** unterhalb des Heizkastens ein Kühlkanal (36) angeordnet ist, der kommunizierend mit den Längsschächten (22) der Tragelemente (18) verbunden ist.

12. Heizkasten nach einem der vorangegangenen Ansprüche, **dadurch gekennzeichnet, dass** die Heizvorrichtung Fördermittel (38) umfasst, mit denen die Vorformlinge (10) einreihig durch die Heizstrecke bewegbar sind, derart, dass die Vorformlinge (10) in den Heizkästen (12) mit den zwei parallel zueinander verlaufenden Transportbahnen in entgegengesetzte Richtungen zwangsgeführt sind.

13. Heizeinrichtung aufweisend mehrere, zur Ausbildung einer Heizstrecke aneinander angrenzend angeordnete Heizkästen (12), wobei je Heizkasten (12) zwei Seitenwände (32) und eine Bodenwand (34) einen Heiztunnel zum Durchtransport der Vorformlinge (10) begrenzen, wobei der Heiztunnel mindestens zwei parallel zueinander verlaufende Heizgassen aufweist, und wobei zwischen zwei nebeneinander, insbesondere parallel zueinander verlaufenden Heizgassen eine Heizeinheit (14) mit mehreren, in Transportrichtung der Vorformlinge (10) längsausgerichteten, stabförmigen Heizelementen (16) angeordnet ist, wobei jeder Heizkasten nach einem der Ansprüche 1 bis 12 ausgeführt ist.

14. Blasmaschine mit einem Heizkasten gemäß einem der Ansprüche 1 bis 12 oder mit einer Heizeinrichtung nach Anspruch 13.

15. Verfahren zur Ausbildung eines Temperaturprofils in dem Wandmaterial von zur Blasformung vorgesehenen Vorformlingen (10) aus thermoplastischem Material, bei dem Vorformlinge (10) in nebeneinander geführten Transportreihen durch einen an mindestens drei Seiten durch Wandelemente (32, 34) begrenzten Heizkasten (12) bewegt werden, wobei die Transportreihen jeweils durch eine Heizgasse des Heizkastens (12) geführt werden und wobei zwischen zwei benachbarten Heizgassen ein Heizelement (18) angeordnet ist, das das Material der zu beiden Seiten vorübergeführten Vorformlinge (10) zur Ausbildung des Temperaturprofils erwärmt, wobei zur thermischen Konditionierung der Vorformlinge (10) ein Heizkasten (12) gemäß einem der Ansprüche 1 bis 12 verwendet wird.

## Claims

1. A heating box for thermally conditioning preforms (10) made of thermoplastic material provided for blow moulding, wherein two side walls (32) and one bottom wall (34) define a heating tunnel for conveying the preforms (10), wherein the heating tunnel has at least two heating channels that run parallel to one another, and wherein a heating unit (14) comprising several rod-shaped heating elements (16) that are oriented longitudinally in the conveying direction of the preforms (10) is arranged between two heating channels that run side by side, in particular parallel to one another, **characterised in that** the heating units (14) each have two column-like carrier elements (18) for supporting the heating elements (16), wherein each of the carrier elements (18) has, at each of its free ends located opposite one another in the longitudinal direction, an aperture (20), which opens a channel-like longitudinal shaft (22) of the carrier elements (18) in such a way that a fluid flow through the longitudinal shaft (22) of the carrier elements (18) is made possible.

2. The heating box according to Claim 1, **characterised in that** the heating unit (14) has at least one web-shaped radiation shield (50), which is arranged between two adjacent heating elements (16) so as to be longitudinally oriented to the heating elements (16).

3. The heating box according to any one of the preceding claims, **characterised in that** each of the rod-shaped heating elements (16) is supported at its end regions located opposite one another in the longitudinal direction at the carrier elements (18) in such a way that the free ends of the heating elements (16) each protrude into the longitudinal shafts (22) of the carrier elements (18).

4. The heating box according to any one of the preceding claims, **characterised in that** in its use position supported at the carrier elements (18) each of the rod-shaped heating elements (16) of a heating unit (14) is connected in an electrically conductive manner to a common plug contact (24) of the heating unit (14).

5. The heating box according to any one of the preceding claims, **characterised in that** the heating units (14) are formed modularly so that they can be removed from the heating boxes (12) for exchange purposes or for maintenance and/or assembly operations.

6. The heating box according to any one of the preceding claims, **characterised in that** the carrier elements (18) each have a removable cover element (26), by means of which a lateral access to the longitudinal shaft (22) can be released.

7. The heating box according to any one of the preceding claims, **characterised in that** in their end regions the heating elements (16) have holding bodies (48), which can be inserted in a positive manner into receiving openings (28) of the carrier elements (18).

8. The heating box according to Claim 7, **characterised in that** the receiving openings (28) are incorporated into a wall region (30) of the carrier element (18) in a chamber-like manner as laterally open inserts.

9. The heating box according to Claim 8, **characterised in that** the wall regions (30) comprising the receiving openings (28) are supported at the carrier elements (18) in a longitudinally displaceable manner at least in the case of the carrier elements (18) of some of the heating units (14).

10. The heating box according to any one of the preceding claims, **characterised in that** two opposing side walls (32) of the heating box (12) have elements reflecting thermal radiation.

11. The heating box according to any one of the preceding claims, **characterised in that** a cooling duct (36), which is communicatively connected to the longitudinal shafts (22) of the carrier elements (18), is arranged beneath the heating box.

12. The heating box according to any one of the preceding claims, **characterised in that** the heating device comprises conveying means (38), by means of which the preforms (10) can be moved in a single row through the heating section in such a way that the preforms (10) are positively guided in opposite directions in the heating boxes (12) with the two conveying paths that run parallel to one another.

13. A heating apparatus having several heating boxes (12) arranged adjacently to form a heating section, wherein two side walls (32) and one bottom wall (34) of each heating box (12) define a heating tunnel for conveying the preforms (10), wherein the heating tunnel has at least two heating channels that run parallel to one another, and wherein a heating unit (14) comprising several rod-shaped heating elements (16) that are oriented longitudinally in the conveying direction of the preforms (10) is arranged between two heating channels that run side by side, in particular parallel to one another, wherein each heating box is embodied according to any one of Claims 1 to 12.

14. A blowing machine comprising a heating box according to any one of Claims 1 to 12 or comprising a heating apparatus according to Claim 13.

15. A method for forming a temperature profile in the wall material of preforms (10) made of thermoplastic material provided for blow moulding, wherein preforms (10) are moved in adjacently guided transport rows through a heating box (12) limited on at least three sides by wall elements (32, 34), wherein the transport rows are each guided through a heating section of the heating box (12), and wherein a heating element (18), which heats the material of the preforms (10) that are guided past on both sides for forming the temperature profile, is arranged between two adjacent heating sections, wherein a heating box (12) according to any one of Claims 1 to 12 is used for thermally conditioning the preforms (10).

## Revendications

1. Caisson chauffant pour le conditionnement thermique de préformes (10) en matériau thermoplastique destinés à être moulées par soufflage, dont deux parois latérales (32) et une paroi de fond (34) délimitent un tunnel de chauffage à travers lequel sont transportées les préformes (10), le tunnel de chauffage présentant au moins deux couloirs de chauffage parallèles, et une unité de chauffage (14) avec plusieurs éléments de chauffage (16) en forme de barres orientées longitudinalement dans le sens de transport des préformes (10) étant agencée entre deux couloirs de chauffage voisins et notamment parallèles, **caractérisé en ce que** les unités de chauffage (14) présentent respectivement deux éléments porteurs (18) en forme de colonne pour le maintien des éléments de chauffage (16), chacun des éléments porteurs (18) présentant à chacune de ses extrémités libres opposées dans son sens longitudinal un passage (20) ouvrant un puits longitudinal (22) en forme de canal dans les éléments porteurs (18) de façon à permettre un écoulement de fluide par le puits longitudinal (22) des éléments porteurs (18).

2. Caisson chauffant selon la revendication 1, **caractérisé en ce que** l'unité de chauffage (14) présente au moins un écran thermique (50) en forme de barrette orientée longitudinalement par rapport aux éléments de chauffage (16) et agencée entre deux éléments de chauffage (16) voisins.

3. Caisson chauffant selon l'une des revendications précédentes, **caractérisé en ce que** chacun des éléments de chauffage (16) en forme de barre est maintenu au niveau de ses deux sections d'extrémité longitudinalement opposées par les éléments porteurs (18) de façon à ce que les extrémités libres des éléments de chauffage (16) pénètrent respectivement dans les puits longitudinaux (22) des éléments porteurs (18).

4. Caisson chauffant selon l'une des revendications précédentes, **caractérisé en ce que** chacun des éléments de chauffage (16) en forme de barre d'une unité de chauffage (14) maintenu par les éléments porteurs (18) en position d'utilisation est branché en connexion électriquement conductrice sur un contact à fiche (24) commun de l'unité de chauffage (14).

5. Caisson chauffant selon l'une des revendications précédentes, **caractérisé en ce que** les unités de chauffage (14) sont de construction modulaire de sorte à pouvoir être extraites des caissons chauffants (12) en vue de leur remplacement ou de travaux de maintenance et/ou de montage.

6. Caisson chauffant selon l'une des revendications précédentes, **caractérisé en ce que** les éléments porteurs (18) présentent respectivement un couvercle (26) permettant d'ouvrir un accès latéral au puits longitudinal (22).

7. Caisson chauffant selon l'une des revendications précédentes, **caractérisé en ce que** les éléments de chauffage (16) présentent au niveau de leurs sections d'extrémité des corps de maintien (48) enfichables dans des logements (28) de forme complémentaire prévus dans les éléments porteurs (18).

8. Caisson chauffant selon la revendication 7, **caractérisé en ce que** les logements (28) sont réalisés en forme de peigne dans une paroi latérale (30) de l'élément porteur (18) pour former des logements d'insertions latéralement ouverts.

9. Caisson chauffant selon la revendication 8, **caractérisé en ce que** les parois (30) avec les logements (28) sont, au moins pour les éléments porteurs (18) de certaines des unités de chauffage (14), logées dans les éléments porteurs (18) de façon à pouvoir coulisser longitudinalement.

10. Caisson chauffant selon l'une des revendications précédentes, **caractérisé en ce que** deux parois latérales (32) opposées du caisson chauffant (12) présentent des éléments réfléchissant le rayonnement thermique.

11. Caisson chauffant selon l'une des revendications précédentes, **caractérisé en ce que** sous le caisson chauffant est aménagé un canal de refroidissement (36) communicant avec les puits longitudinaux (22) des éléments porteurs (18).

12. Caisson chauffant selon l'une des revendications précédentes, **caractérisé en ce que** le dispositif de chauffage comprend des moyens de transport (38) permettant de déplacer les préformes (10) en rangée simple le long de la section de chauffage de façon à ce que les préformes (10) traversent les caissons chauffants (12) dotés des deux voies de transport parallèles en guidage forcé selon des directions contraires.

13. Dispositif de chauffage présentant plusieurs caissons chauffants (12) contigus formant une section de chauffage, chaque caisson chauffant (12) étant doté de deux parois latérales (32) et d'une paroi de fond (34) qui délimitent un tunnel de chauffage à travers lequel sont transportées les préformes (10), le tunnel de chauffage présentant au moins deux couloirs de chauffage parallèles, et une unité de chauffage (14) avec plusieurs éléments de chauffage (16) en forme de barres orientées longitudinalement dans le sens de transport des préformes (10) étant agencée entre deux couloirs de chauffage voisins et notamment parallèles, chaque caisson chauffant étant réalisé conformément à l'une des revendications 1 à 12.

14. Machine de moulage par soufflage avec un caisson chauffant selon l'une des revendications 1 à 12 ou avec un dispositif de chauffage selon la revendication 13.

15. Procédé d'obtention d'un profil de températures dans le matériau de la paroi de préformes (10) en matériau thermoplastique destinés à être moulées par soufflage, dans le cadre duquel les préformes (10) sont déplacées en rangées de transport voisines à travers un caisson chauffant (12) délimité sur au moins trois côtés par des éléments de paroi (32, 34), les rangées de transport étant respectivement conduites par un couloir de chauffage du caisson chauffant (12), et un élément de chauffage (18) étant agencé entre deux couloirs de chauffage voisins, lequel élément chauffe le matériau des préformes (10) passant des deux côtés pour obtenir le profil de température, un caisson chauffant (12) selon l'une des revendications 1 à 12 étant utilisé pour le conditionnement thermique des préformes (10).
